# EUROPEAN PATENT APPLICATION

(11) **EP 3 223 010 A1**
(43) Date of publication of application: **27.09.2017**
(21) Application number: 15861676.3
(22) Date of filing: 09.11.2015
(51) Int. Cl.: G01N 27/83, G01N 27/90

(54) **MAGNETIC FLAW DETECTION DEVICE AND MAGNETIC FLAW DETECTION METHOD**

(30) Priority: 21.11.2014 JP 2014236335
(71) Applicant: Konica Minolta, Inc., Tokyo 100-7015 (JP)
(72) Inventor: KAGAWA, Tetsuya, Tokyo 100-7015 (JP)
(74) Representative: Hoffmann Eitle
(86) International application number: PCT/JP2015/081486
(87) International publication number: WO 2016/080229

(57) **Abstract**

Disclosed is a magnetic flaw detection device and a magnetic flaw detection method which are configured to: apply a magnetic field to an inspection target object; detect magnetism at a plurality of mutually different first detection positions from an exterior surface of the inspection target object, and, based on respective detection results at the first detection positions, derive a position of a given defect in the inspection target object, along a first direction causing a distance with respect to the inspection target object to gradually increase or decrease.

## Description

### Technical Field

The present invention relates to a magnetic flaw detection device and a magnetic flaw detection method for detecting a given flaw or defect (abnormality) in an inspection target by using a magnetism detection unit capable of detecting magnetism.

### Background Art

A method for inspecting whether a flow or defect (abnormality) such as a mark or a local wall thinning (local reduction in wall thickness) is present in a metal pipe such as a steel pipe, an iron pipe or an aluminum pipe, mainly includes an ultrasonic flaw detection method utilizing ultrasonic wave, and a magnetic flaw detection method utilizing magnetism, in addition to visual appearance observation. As this magnetic flaw detection method, there have been conventionally known a leakage flux flaw detection method which comprises applying a DC magnetic field or an AC magnetic field to an inspection target object and detecting a leakage magnetic flux caused by a defect (defect-caused leakage flux) (see, for example, Patent Literature 1), and an eddy current flaw detection method which comprises inducing an eddy current in an inspection target object in an AC magnetic field and detecting a change in the eddy current caused by a defect (see, for example, Patent Literature 2). Further, in recent years, there has been proposed a magnetic flaw detection device employing a Helmholtz coil capable of generating a spatially homogeneous magnetic field (Helmholtz-type magnetic flaw detection device (see, for example, Patent Literature 3).

In case of subjecting, to flaw detection, a multi-laminated pipe e.g., a thermally-insulated pipe, serving as inspection target object, wherein the multi-laminated pipe is prepared by laminating, in a radial direction thereof, a plurality of tubular pipe members formed of a material such as a magnetic material or a thermoconductive material and having mutually different diameters, a change in magnetic field is significantly large in one of the pipe members located on an outermost side thereof, as compared to the remaining pipe members located on an inner side with respect to the outermost pipe member, so that the methods disclosed in the Parent Literature 1 and the Parent Literature 2 have difficulty in detecting a flaw in the inner pipe member. On the other hand, the Helmholtz-type magnetic flaw detection device disclosed in the Patent Literature 3 is designed to subject a double-laminated thermally-insulated pipe as an inspection target object to flaw detection. However, even if a defect can be detected by means of a change in magnetic field, it is difficult to distinguish whether the detected defect is formed in an inner pipe member or in an outer pipe member, by using a single magnetic sensor provided over an outer peripheral surface of the thermally-insulated pipe.

### Citation List

### Patent Literature

Patent Literature 1: JP 11-83808 A
Patent Literature 2: JP 05-164745 A
Patent Literature 3: JP 2014-44087 A

### Summary of Invention

The present invention has been made in view of the above circumstances, and an object thereof is to provide a magnetic flaw detection device and a magnetic flaw detection method capable of deriving a position of a given flow or defect in an inspection target object, along a first direction causing a distance with respect to the inspection target object to gradually increase or decrease.

The magnetic flaw detection device and the magnetic flaw detection method according to the present invention can derive a position of a given flow or defect in an inspection target object, along a first direction causing a distance with respect to the inspection target object to gradually increase or decrease.

The magnetic flaw detection device and the magnetic flaw detection method according to the present invention are configured to: apply a magnetic field to an inspection target object; detect magnetism at a plurality of mutually different first detection positions from an external surface of the inspection target object, and, based on respective detection results at the first detection positions, derive a position of a given defect in the inspection target object, along a first direction causing a distance with respect to the inspection target object to gradually increase or decrease.

These and other objects, features, and advantages of the present invention will become apparent upon reading of the following detailed description along with the accompanying drawings.

### Brief Description of Drawings

FIG. 1 is a diagram depicting a configuration of a magnetic flaw detection device according to one embodiment.
FIG. 2 is a perspective view depicting an external appearance of an inspection target object to be inspected by the magnetic flaw detection device according to this embodiment.
FIG. 3 is an explanatory diagram of a defect position calculation method in the magnetic flaw detection device according to this embodiment.
FIG. 4 is a diagram depicting a configuration of a first modification of the magnetic flaw detection device according to this embodiment.
FIG. 5 is a diagram depicting a configuration of a second modification of the magnetic flaw detection device according to this embodiment.
FIG. 6 is a diagram depicting a configuration of a third modification of the magnetic flaw detection device according to this embodiment.
FIG. 7 is a diagram depicting a configuration of a fourth modification of the magnetic flaw detection device according to this embodiment.

### Description of Embodiments

One embodiment of the present invention will now be described based on the drawings. It should be noted that elements or components assigned with the same reference sign in the figures means that they are identical, and therefore duplicated description thereof will be omitted appropriately. In this specification, for a generic term, a reference sign without any suffix is assigned thereto, and, for a term meaning an individual element or component, a reference sign with a suffix is assigned thereto.

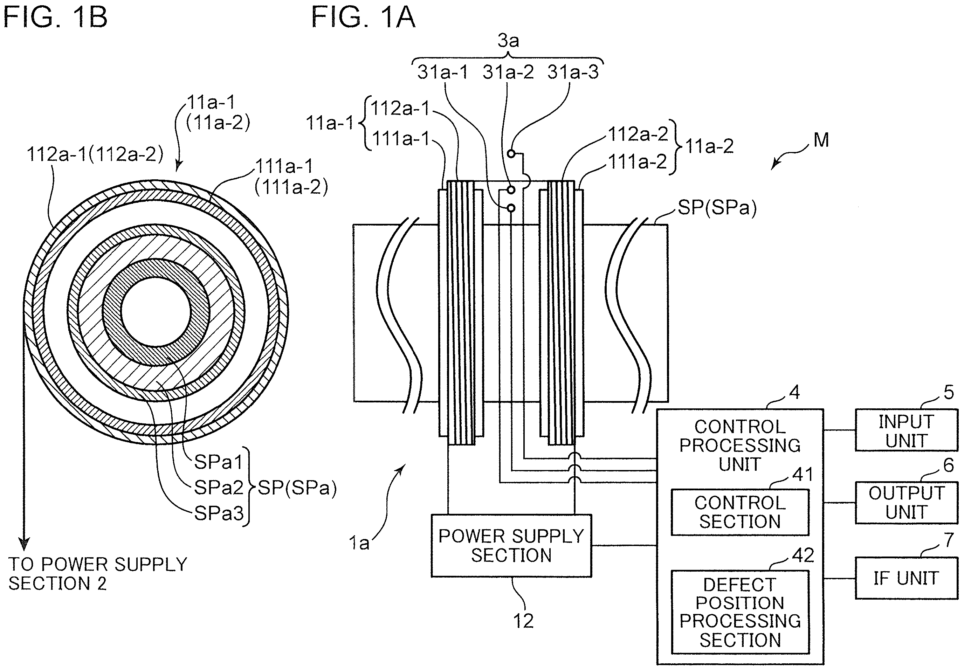

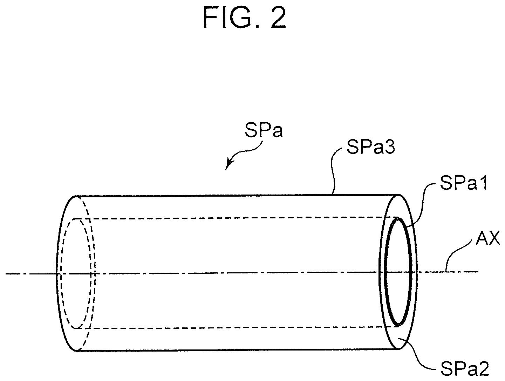

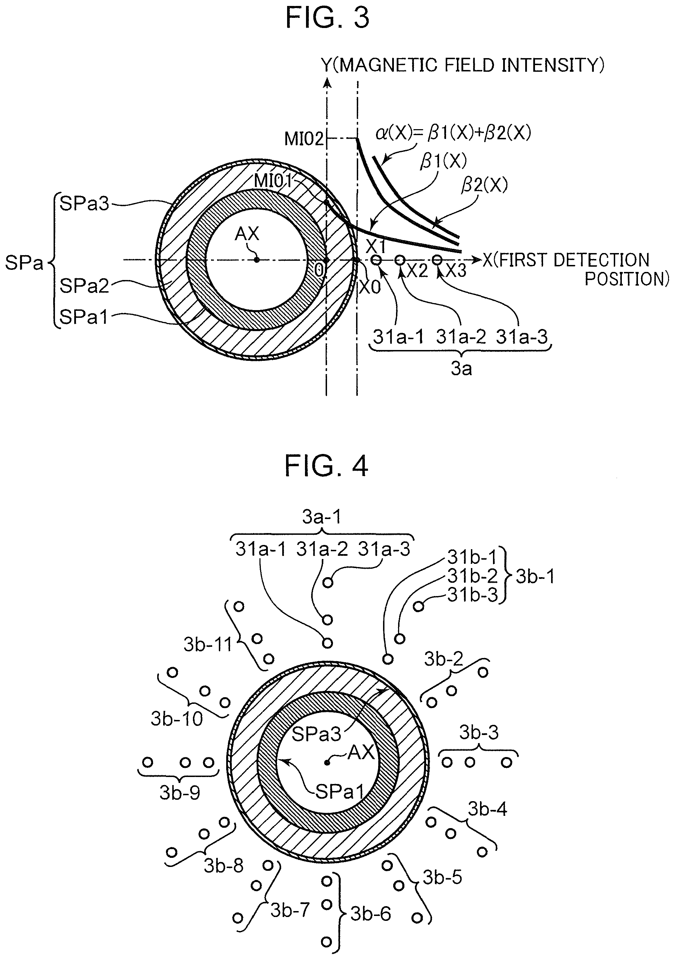

FIG. 1 is a diagram depicting a configuration of a magnetic flaw detection device according to one embodiment, wherein FIG. 1A depicts an overall configuration thereof, and FIG. 1B is a sectional view of a vicinity around a magnetic field application portion thereof. FIG. 2 is a perspective view depicting an external appearance of an inspection target object to be inspected by the magnetic flaw detection device according to this embodiment. FIG. 3 is an explanatory diagram of a defect position calculation method in the magnetic flaw detection device according to this embodiment.

The magnetic flaw detection device according to this embodiment is a device configured to: apply a magnetic field to the inspection target object; detect a change in magnetic field occurring due to a given flaw or defect (abnormality) of the inspection target object, at respective ones of a plurality of first detection positions having mutually different distances from an external surface of the inspection target object, along a first direction causing a distance with respect to the inspection target object to gradually increase or decrease, and obtain a predetermined defect position of the inspection target object along the first direction on the detection results. For example, as depicted in FIG. 1, the magnetic flaw detection device M according to this embodiment includes a magnet field application unit 1a, a first group detection unit 3a, and a control-processing unit 4 having a defect position processing section 42. In one example depicted in FIG. 1, it further includes an input unit 5, an output unit 6, and an interface unit (IF unit) 7.

The magnet field application unit 1a is a device for applying a magnetic field to an inspection target object SP. The inspection target object SP is preferably a metal pipe SPa such as a steel pipe, an iron pipe or an aluminum pipe, and more preferably a multi-laminated pipe prepared by laminating, in a radial direction thereof, a plurality of tubular members formed of a material such as a magnetic material or an electroconductive material and having mutually different diameters. In the example depicted in FIG. 1, the inspection target object SP is a double-laminated thermally-insulated pipe SPa depicted in FIG. 2. For example, as depicted in FIG. 2, this thermally-insulated pipe SPa is constructed such that it includes a steel pipe member SPa1 located on an innermost side thereof, a thermal insulator SPa2 covering an outer periphery of the steel pipe member SPa1 with a given thickness, and a hot-dip galvanized steel sheet SPa3 as an exterior sheet-metal located on an outermost side thereof. The magnet field application unit 1a comprises an exciting coil 11a and a power supply section 12

The exciting coil 11 a is a device for, in response to receiving a supply of electric power from the power supply section 12, forming an electric field and applying the formed electric field to the inspection target object SP. As the exciting coil 11a, it is possible to use any of various heretofore-known configurations depending on a type of flaw detection method such as a leakage flux flaw detection method or an eddy current flaw detection method. As one example, in the leakage flux flaw detection method, the exciting coil 11 a is configured to apply a DC magnetic field or an AC magnetic field to the inspection target object SP to thereby generate a magnetic flux within the inspection target object SP. As another example, in the eddy current detection method, the exciting coil 11a is configured to apply an AC magnetic field to the inspection target object SP to thereby generate an eddy current in the inspection target object SP. In this embodiment, the exciting coil 11 a in the first type of magnet field application unit 1 a includes a pair of first and second exciting coils 11a-1, 11a-2 depicted in FIG. 1.

The pair of first and second exciting coils 11a-1, 11a-2 are disposed with the thermally-insulated pipe SPa penetrating through respective cores thereof, in spaced-apart relation to each other by a given distance along an axial direction of the thermally-insulated pipe Spa. The given distance is appropriately set. In one example, for forming a Helmholtz coil, it is set to a length approximately equal to a radius equal to each of the first and second exciting coils 11a-1, 11a-2. The first exciting coil 11a-1 is formed by winding a first electroconductive member 112a-1, e.g., a long wire having a sectional shape such as a round shape or a polygonal shape and exhibiting electrical conductivity, around a first coil bobbin 111a-1 as a tubular member having a relatively short height dimension (shout height), through an electrical insulating material such as a resin or an oiled paper. Similarly, the second exciting coil 11a-2 is formed by winding a second electroconductive member 112a-2, e.g., a long wire having a sectional shape such as a round shape or a polygonal shape and exhibiting electrical conductivity, around a second coil bobbin 111a-2 as a short-height tubular member, through an electrical insulating material such as a resin or an oiled paper. Each of the first and second coil bobbins 111a-1, 111a-2 is formed of a non-magnetic insulator such as a resin material. The number of turns of each of the first and second exciting coils 11a-1, 11a-2 is appropriately set depending on a desired magnetic field intensity to be generated by the first and second exciting coils 11a-1, 11a-2, or the like. Each of the first and second electroconductive members 112a-1, 112a-2 is an electroconductive wire formed of a material having a relatively high electrical conductivity, such as copper or aluminum, and insulatingly covered by a resin. The first and second exciting coils 11a-1, 11a-2 are serially connected to each other. More specifically, one end and the other end of the first exciting coil 11a-1 are connected, respectively, to the power supply section 12 and one end of the second exciting coil 11a-2, and the other end of the second exciting coil 11a-2 is connected to the power supply section 12.

The power supply section 12 is a device which is connected to the control-processing unit 4 and is operable , according to control of the control-processing unit 4, to feed electric power to the exciting coil 11 a to thereby cause the exciting coil 11 a to generate an electric field. The power supply section 12 is operable to feed a given current depending on a type of flaw detection method, such as a DC current, an AC current or a pulse current, to the pair of first and second exciting coils 11a-1, 11a-2 to thereby cause the pair of first and second exciting coils 11a-1, 11 a-2 to generate a given magnetic field depending on the type of flaw detection method, such as a DC magnetic field, an AC magnetic field or a pulsed magnetic field. In order to feed currents with reversed phases, respectively, to the pair of first and second exciting coils 11a-1, 11a-2, or feed current to only one of the pair of first and second exciting coils 11a-1, 11a-2, the power supply section 2 may include a switching circuit for appropriately switching current-carrying paths leading, respectively, to the first and second exciting coils 11a-1, 11a-2.

The first group detection unit 3a includes a plurality of first magnetism detection units 31a each capable of detecting magnetism. The plurality of first magnetism detection units 31a are arranged between the pair of first and second exciting coils 11a-1, 11a-2 and over an external surface of the inspection target object SP (the term "over" herein encompasses both meanings of "directly on" and "above", wherein the term "above" means a direction extending outwardly away from the external surface), at respective ones of a plurality of first detection positions having mutually different distances from the external surface, along a first direction causing a distance with respect to the inspection target object SP to gradually increase or decrease. Each of the plurality of first magnetism detection units 31 a is connected to the control-processing unit 4 is operable to detect magnetism depending on a type of flaw detection method, and output the detection result to the control-processing unit 4. As one example, in the leakage flux flaw detection method, magnetism arising from a leakage flux caused by a defect is detected. As another example, in the eddy current flaw detection method, magnetism arising from a change in eddy current caused by a defect is detected. In the example depicted in FIG. 1, the first group detection unit 3a is configured such that it includes three first magnetism detection units 31a-1 to 31a-3. The three first magnetism detection units 31a-1 to 31a-3 are arranged between the pair of first and second exciting coils 11a-1, 11a-2 and over an outer peripheral (exterior) surface of the thermally-insulated pipe SPa, at respective ones of three first detection positions having mutually different first to third distances from the outer peripheral surface, along a radial direction of the thermally-insulated pipe SPa.

As each of the first magnetism detection units 31a, it is possible to use any of various magnetic sensors. More specifically, examples of a magnetic sensor usable as the first magnetism detection unit 31a includes: a magnetic sensor using a magnetoresistive element (MR element) utilizing a magnetoresistive effect that an electric resistance varies according to a magnetic field; a magnetic sensor using a magneto-impedance element utilizing a magneto-impedance effect that an impedance varies according to a magnetic field based on a skin effect of a high-permeability alloy magnetic body; a magnetic sensor using a Hall element utilizing the Hall effect; a magnetic sensor using a flux gate utilizing a saturation magnetization property of a high-permeability material; and a magnetic sensor using a superconducting quantum interference device (SQUID) utilizing a superconductor ring having two Josephson junctions at opposite positions.

The input unit 5 is a device which is connected to the control-processing unit 4 and is operable to allow a user to input, into the magnetic flaw detection device M, various data necessary for measurement, such as various commands such as a command for giving an instruction for measurement of the inspection target object SP, and an input of an identifier of the inspection target object SP (e.g., a reference or serial number of the inspection target object), and examples of this device include a plurality of input switches each having a given function assigned thereto, a keyboard and a mouse. The output unit 6 is a device which is connected to the control-processing unit 4 and is operable , according to control of the control-processing unit 4, to output the commands and data input from the input unit 5 and a measurement result obtained by measuring the inspection target object SP by the magnetic flaw detection device M (e.g., measurement data of the magnetism detection unit 3, the presence or absence of a defect, and a position of the defect), etc., and examples of this device include: a display device such as a CRT display, an LCD (liquid crystal display) and an organic EL display; and a printing device such as a printer.

The input unit 5 and the output unit 6 may be constructed as a touch panel. In the case of constructing such a touch panel, the input unit 5 serves as a resistive or capacitive-type position input device for detecting and inputting an operated position, and the output unit 6 serves as a display device. In this touch panel, the position input device is provided on a display surface of the display device on which one or more candidates for input content inputtable into the display device are displayed. When a user touches a position of the display surface at which an input content the user wants to input is displayed, the touched position is detected by the position input device, and the content displayed at the detected position is input into the magnetic flaw detection device M, as an input content operated by the user. Such a touch panel allows a user to intuitively understand an input operation, so that it is possible to provide a magnetic flaw detection device M which is easy to handle for a user.

The IF unit 7 is a circuit which is connected to the control-processing unit 4 and is operable, according to control of the control-processing unit 4, to perform input and output of data with respect to an external device, and examples of this circuit includes: an interface circuit conforming to the serial communication standard RS-232C; an interface circuit conforming to the Bluetooth (trademark) standard; an interface circuit for infrared communication conforming to the IrDA (Infrared Data Association) standard or the like; and an interface circuit conforming to the USB (Universal Serial Bus) standard.

The control-processing unit 4 is a circuit for controlling control targets of the magnetic flaw detection device M according to respective functions of the control targets. For example, the control-processing unit 4 is constructed such that it includes a microcomputer equipped with a CPU (Central Processing Unit), a memory and its peripheral circuit. By executing a program, a control section 41 and a defect position processing section 42 are functionally formed in the control-processing unit 4.

The control section 41 is operable to control components (units, sections, etc.) of the magnetic flaw detection device M according to functions of the components.

The defect position processing section 42 is operable, based on respective detection results of the plurality of first magnetism detection units 31a in the first group detection unit 3a, to derive a position of a given defect in the inspection target object SP along the first direction. In the above example, the defect position processing section 42 is operable, based on respective detection results of the three first magnetism detection units 31a-1 to 31a-3 in the first group detection unit 3a, to derive a position of a given defect in the thermally-insulated pipe SPa along the radial direction of the thermally-insulated pipe SPa.

Preferably, the defect position processing section 42 is operable, using the following conditions (1) and (2), and based on the detection results of the plurality of first magnetism detection units 31a in the first group detection unit 3a, to derive respective magnetic field intensities at a plurality of observation target positions located on an inner side with respect to the exterior surface of the inspection target object SP at mutually different distances from the exterior surface along the first direction, and then, based on the derived magnetic field intensities at the plurality of observation target positions, to derive a position of the given defect in the inspection target object SP:
the condition (1): the detection result of an arbitrary one of the plurality of first magnetism detection units 31a is a sum of respective magnetic fields intensities of magnetic fields which are originated at respective ones of the plurality of observation target positions and propagated from the plurality of observation target positions to the first detection position of the arbitrary one of the plurality of first magnetism detection units 31 a, and
the condition (2): the magnetic field intensity has a specific relationship with respect to a distance between the observation target position and the first detection position.

More specifically, the defect position processing section 42 derives a defect position in the following manner. Assuming that a magnetic field intensity at the observation target positions is MI 0, a magnetic field intensity MI at the first detection positions is generally attenuated in inverse proportion to a square of a distance L between the observation target position and the first detection position (MI = k × (MI 0 / L²), where k denotes a proportional constant), as the condition 2. Thus, in the thermally-insulated pipe SPa, as depicted in FIG. 3, assuming that, in an X-Y coordinate system, the horizontal axis X having a coordinate origin at an outer peripheral surface of the steel pipe SPa1 represents a distance from the outer peripheral surface of the steel pipe SPa1 along the radial direction, and the vertical axis Y represents a magnetic field intensity MI, wherein respective magnetic field intensities MI at the steel pipe member SPa1 and the hot-dip galvanized steel sheet SPa3 as the exterior sheet-metal are denoted, respectively, by MI 01 and MI 02, and a distance between the outer peripheral surface of the steel pipe member SPa1 and an outer peripheral surface of the hot-dip galvanized steel sheet SPa3 is denoted by X0, the first magnetism detection unit 31a-1 disposed at the first detection position at a distance X1 from the outer peripheral surface of the steel pipe member SPa1 satisfies the condition 1, and thus detects a magnetic field intensity α (X1) = k × (MI 01 /X1²) + k × (MI 02 / (X1 - X0)²). Similarly, the first magnetism detection unit 31a-2 disposed at the first detection position at a distance X2 from the outer peripheral surface of the steel pipe member SPa1 satisfies the condition 1, and thus detects a magnetic field intensity α (X2) = k × (MI 01 / X2²) + k × (MI 02 / (X2 - X0)²). Further, the first magnetism detection unit 31a-3 disposed at the first detection position at a distance X3 from the outer peripheral surface of the steel pipe member SPa1 satisfies the condition 1, and thus detects a magnetic field intensity α (X3) = k × (MI 01 / X3²) + k × (MI 02 / (X3 - X0)²). In the above formulas, the proportional constant k and the distances X0, X1, X2 and X3 are known, and the detection results α (X) are obtained as measurement values through respective measurements by the first magnetism detection units 31a-1 to 31a-3, so that the magnetic field intensity MI 01 at the steel pipe member SPa1 and the magnetic field intensity MI 02 at the hot-dip galvanized steel sheet SPa3 can be derived by using any two of the above three formulas. Alternatively, a curve α (X) best fitting to the detection results of the first magnetism detection units 31a-1 to 31a-3 may be derived, for example, by the least-square method, to create, from the derived curve α (X), the following two formulas: α (XA) = k × (MI 01 / XA²) + k × (MI 02 / (XA - X0)²; and α (XB) = k × (MI 01 / XB²) + k × (MI 02 / (XB - X0)², respectively, at preset mutually different given two positions XA and XB (XA, XB > 0), and then the magnetic field intensity MI 01 at the steel pipe member SPa1 and the magnetic field intensity MI 02 at the hot-dip galvanized steel sheet SPa3 may be derived by using these two formulas. In FIG. 3, a curve β1 (X) indicates, on an assumption that the observation target position is set to the outer peripheral surface of the steel pipe member SPa1, a relationship between a magnetic field intensity β1 (X) of a magnetic field and a distance X from the outer peripheral surface, and a curve β2 (X) indicates, on an assumption that the observation target position is set to the outer peripheral surface of the hot-dip galvanized steel sheet SPa3, a relationship between a magnetic field intensity β2 (X) of a magnetic field and a distance X from the outer peripheral surface. The curve α (X) indicates a magnetic field intensity α (X) detected by the first magnetism detection unit 3a located at a position having a distance X from the outer peripheral surface, i.e., α (X) = β1 (X) + β2 (X).

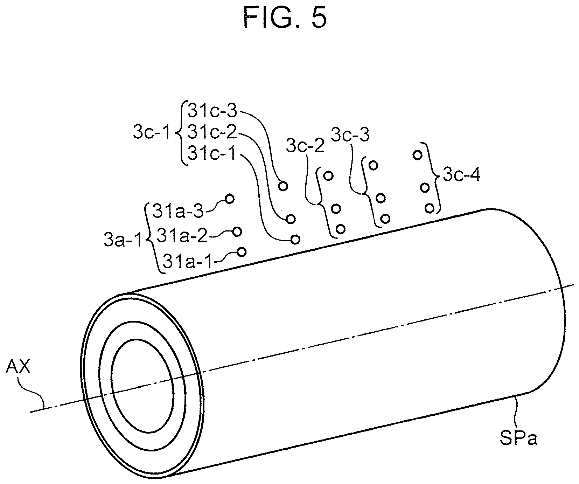

Then, the derived magnetic field intensity MI 01 at the steel pipe member SPa1 is compared with a magnetic field intensity MI ref1 at the steel pipe member SPa1 preliminarily derived in a defect-free thermally-insulated pipe SPa, to determine where there is a defect. As a result of this determination, when a difference between the magnetic field intensity MI ref1 and the magnetic field intensity MI 01 at the steel pipe member SPa1 falls within a given first range th1 set in consideration of noise, it is determined that there is no defect. On the other hand, when the difference between the magnetic field intensity MI ref1 and the magnetic field intensity MI 01 at the steel pipe member SPa1 is beyond the given first range th1, it is determined that there is a defect, i.e., that there is a defect in the steel pipe member SPa1 as an inner pipe member located relatively radially inwardly. Further, the derived magnetic field intensity MI 02 at the hot-dip galvanized steel sheet SPa3 is compared with a magnetic field intensity MI ref2 at the hot-dip galvanized steel sheet SPa3 preliminarily derived in a defect-free thermally-insulated pipe SPa, to determine whether there is a defect. As a result of this determination, when a difference between the magnetic field intensity MI ref2 and the magnetic field intensity MI 02 at the hot-dip galvanized steel sheet SPa3 falls within a given second range th2 set in consideration of noise, it is determined that there is no defect. On the other hand, when the difference between the magnetic field intensity MI ref2 and the magnetic field intensity MI 02 at the hot-dip galvanized steel sheet SPa3 is beyond the given second range th2, it is determined that there is a defect, i.e., that there is a defect in the hot-dip galvanized steel sheet SPa3 as an outer pipe member located relatively radially outwardly. That is, it is possible to determine a defect position along the radial direction. Alternatively, in the case where a plurality of second group detection units 3b (see FIG. 4) are additionally provided in a circumferential direction of the thermally-insulated pipe SPa, as described later, the determination as to whether there is a defect may be performed by: mutually comparing a plurality of magnetic field intensities MI 01 at the steel pipe member SPa1 derived at respective circumferential positions, wherein, when a difference is detected therebetween, it is determined that there is a defect in the steel pipe member SPa1 at a circumferential position where the difference is detected; and mutually comparing a plurality of magnetic field intensities MI 02 at the hot-dip galvanized steel sheet SPa3 derived at the respective circumferential positions, wherein, when a difference is detected therebetween, it is determined that there is a defect in the hot-dip galvanized steel sheet SPa3 at a circumferential position where the difference is detected. Alternatively, in the case where a plurality of third group detection units 3c (see FIG. 5) are additionally provided in an axial direction, as described later, the determination as to whether there is a defect may be performed by: mutually comparing a plurality of magnetic field intensities MI 01 at the steel pipe member SPa1 derived at respective axial positions, wherein, when a difference is detected therebetween, it is determined that there is a defect in the steel pipe member SPa1 at an axial position where the difference is detected; and mutually comparing a plurality of magnetic field intensities MI 02 at the hot-dip galvanized steel sheet SPa3 derived at the respective axial positions, wherein, when a difference is detected therebetween, it is determined that there is a defect in the hot-dip galvanized steel sheet SPa3 at an axial position where the difference is detected. When there is pre-derived data about a defect-free thermally-insulated pipe SPa, it is possible to drive the difference using the data about the defect-free thermally-insulated pipe SPa as the actually measured data α, instead of directly using a measurement value. In this case, it is possible to directly compare the magnetic field intensity MI 01 with the magnetic field intensity MI ref1, and directly compare the magnetic field intensity MI 02 with the magnetic field intensity MI ref2.

As above, in the magnetic flaw detection device M, by comparing respective derived magnetic field intensities at the plurality of observation target positions with a magnetic field intensity in a defect-free normal state, it is possible to determine whether there is a defect, and consequently derive a defect position.

Preferably, when the inspection target object SP is a multi-laminated pipe prepared by laminating a plurality of tubular members having mutually different diameters, in a radial direction thereof, the defect position processing section 42 is operable to: select two of the plurality of first magnetism detection units 31a in the first group detection unit 3a; carry out an operation of subtracting, from a detection result of one of the selected two first magnetism detection units 31a which is farther in distance from the exterior surface along the first direction, a division result derived from dividing a detection result of the remaining one of the selected two first magnetism detection units 31a which is nearer in distance from the exterior surface along the first direction, by a square of the distance of the farther first magnetism detection unit 31 a from the exterior surface; and compare the derived subtraction result with a given determination threshold to thereby derive whether or not there is a defect in one or more of the plurality of tubular members, except one of the plurality of tubular members located on an outermost side thereof, as a position of the given defect in the inspection target object SP.

More specifically, the defect position processing section 42 derives a defect position in the following manner. For example, in the case where the first magnetism detection unit 31a-1 is located at the first detection position at a distance of 1 mm from the outer peripheral surface of the hot-dip galvanized steel sheet SPa3, and the first magnetism detection unit 31a-2 is located at the first detection position at a distance of 5 mm from the outer peripheral surface of the hot-dip galvanized steel sheet SPa3, the defect position processing section 42 is operable to: carry out an operation of subtracting, from a detection result α(5 mm) of one 31a-2 of the two first magnetism detection units 31a-1, 31a-2 which is farther in distance X from the outer peripheral surface along the radial direction, a division result α(1 mm) / 25 derived from dividing a detection result α(1 mm) of the remaining one 31a-1 of the selected two first magnetism detection units 31a-1, 31a-2 which is nearer in distance X from the outer peripheral surface along the radial direction, by a square of the distance 5 mm of the farther first magnetism detection unit 31a-2 from the outer peripheral surface (α(5 mm) - α(1 mm) / 25 = α sub); and compare the derived subtraction result α sub with a given determination threshold th3 to thereby derive whether or not there is a defect in one or more of the plurality of tubular members, except the hot-dip galvanized steel sheet SPa3 as an outer pipe member located on a relatively outer side of the thermally-insulated pipe SPa, i.e., in the steel pipe member SPa1 as an inner pipe member located on a relatively inner side of the thermally-insulated pipe SPa, as a position of the given defect in the inspection target object SP. A magnetic field intensity is attenuated in reverse proportion to a square of a distance, and thus it is considered that, when there is no defect in the steel pipe member SPa1 as an inner pipe member, and there is a defect in the steel sheet SPa3 as an outer pipe member, a difference between the detection result α(1 mm) of the first magnetism detection unit 31a-1 and the detection result α(5 mm) of the first-group magnetism detection unit 31a-2 is relatively large, and, when there is a defect in the steel pipe member SPa1 as an inner pipe member, and there is no defect in the steel sheet SPa3 as an outer pipe member, the difference between the detection result α(1 mm) of the first-group magnetism detection unit 31a-1 and the detection result α(5 mm) of the first-group magnetism detection unit 31a-2 is relatively small. Based on this assumption, the determination threshold th3 is set to an appropriate value (e.g., a value close to 0) depending on a magnetic field intensity of a magnetic field applied from the magnet field application unit 1a. Thus, the defect position processing section 42 is operable, when the subtraction result α sub is equal to or greater than the determination threshold th3, to determine that there is a defect in the steel pipe member SPa1 as an inner pipe member, and, when the subtraction result α sub is less than the determination threshold th3, to determine that there is no defect in the steel pipe member SPa1 as an inner pipe member. Preferably, a curve α (X) best fitting to the detection results of the first magnetism detection units 31a-1 to 31a-3 is derived, for example, by the least-square method, and the detection result α(1 mm) of the first magnetism detection unit 31a-1 and the detection result α(5 mm) of the first-group magnetism detection unit 31a-2 are derived from the derived curve α (X). The distance from the outer peripheral surface of the hot-dip galvanized steel sheet SPa located on the outermost side has a strong influence on the detection result α (X), and there is a possibility that the hot-dip galvanized steel sheet SPa is deformed. Thus, the distance X between the outer peripheral surface of the hot-dip galvanized steel sheet SPa and each of the first magnetism detection units 31a-1 to 31a-3 may be actually measured by a distance meter or the like.

In this magnetic flaw detection device CM, by utilizing the phenomenon that a magnetic field intensity is attenuated in reverse proportion to a square of a distance, it is possible to easily derive the presence or absence of a defect of a tubular member on an inner side with respect to an outermost tubular member, as a position of the given defect in the inspection target object SP. In particular, as mentioned above, in a double-laminated pipe such as a thermally-insulated pipe SPa, it is only necessary to discriminate between a defect in an outer pipe (in the above example, the hot-dip galvanized steel sheet SPa3) located on a relatively outer side of the double-laminated pipe, and a defect in an inner pipe (in the above example, the steel pipe member SPa1) located on a relatively inner side of the double-laminated pipe. Therefore, the above magnetic flaw detection device CM is suitable in the case where the inspection target object SP is a double-laminated pipe.

In an operation for detecting a flaw or defect of an inspection target object SP such as a thermally-insulated pipe SPa using the above magnetic flaw detection device M, a user (operator) sets the pair of first and second exciting coils 11a-1, 11a-2 to the inspection target object SP with a given distance therebetween. Then, when the user turns on a non-depicted power switch, the control-processing unit 4 initializes a part of the components having need thereof and executes a program to functionally form the control section 41 and the defect position processing section 42 therein.

In response to receiving an instruction for start of flaw detection from the user via the input unit 5, the control section 41 instructs the power supply section 2 to feed a current depending on a type of flaw detection method, to the pair of first and second exciting coils 11a-1, 11a-2. Thus, the pair of first and second exciting coils 11a-1, 11a-2 generate a magnetic field depending on a type of flaw detection method, and applies the generated magnetic field to the inspection target object SP. This magnetic field is propagated through the inspection target object SP. Then, the plurality of first magnetism detection units 31a of the first group detection unit 3a detect a magnetic field intensity of this magnetic field, and outputs respective detection results to the control-processing unit 4. Then, based on the detection results from the plurality of first magnetism detection units 31a, the defect position processing section 42 determines whether there is a given defect in the inspection target object SP, and determines a defect position along the first direction. The control section 41 outputs the respective detection results of the plurality of first magnetism detection units 31a, and information about the presence or absence of a defect and the defect position along the first direction, to the output unit 6. The control section 41 may be configured to output the respective detection results of the plurality of first magnetism detection units 31 a, and the information about the presence or absence of a defect and the defect position along the first direction, to a non-depicted external device via the IF unit 7, on an as-needed basis.

As described above, in the magnetic flaw detection device M according to this embodiment and a magnetic flaw detection method to be implemented therein, it is possible to detect magnetism using the plurality of first magnetism detection units 31a in the first group detection unit 3a at respective ones of the plurality of first detection positions having mutually different distances from the exterior surface of the inspection target object SP. Thus, it is possible to detect, based on obtained detection results, a position of the given defect in the inspection target object SP along a first direction causing a distance with respect to the inspection target object SP to gradually increase or decrease (in the above example, a radial direction of the inspection target object SP), using the defect position processing section 42. In the above example, it is derived whether there is a defect in the steel pipe member SPa1 located on the radially inner side of the inspection target object SP or in the hot-dip galvanized steel sheet SPa3 located on the radially outer side of the inspection target object SP.

FIG. 4 is a diagram depicting a configuration of a first modification of the magnetic flaw detection device according to this embodiment. FIG. 5 is a diagram depicting a configuration of a second modification of the magnetic flaw detection device according to this embodiment.

That is, as depicted in FIG. 4, the above magnetic flaw detection device M may additionally include a second group detection unit 3b including a plurality of second magnetism detection units 31b each capable of detecting magnetism, wherein the plurality of second magnetism detection units 31b are arranged over the exterior surface of the inspection target object SP at respective ones of a plurality of second detection positions having mutually different distances from the exterior surface, along the first direction. The second group detection unit 3b is disposed with respect to the first group detection unit 3a along a circumferential direction about an axis extending in a second direction orthogonal to the first direction, with a given angular distance therebetween. In this case, the defect position processing section 42 is operable, based on respective detection results of the plurality of first magnetism detection units 31a in the first group detection unit 3a and the plurality of second magnetism detection units 31b in the second group detection unit 3b, to derive a position of the given defect in the inspection target object SP along the first direction and along the circumferential direction. More specifically, in one example depicted in FIG. 4, in order to detect a given flaw or defect over the entire circumference of the thermally-insulated pipe SPa, the second group detection unit 3b is constructed such that it includes eleven second group detection units 3b-1 to 3b-11, although the number of the second group detection units 3b may be one. Each of the eleven detection unit groups 3b-1 to 3b-11 includes three second magnetism detection units 31b-1 to 31b-3 arranged over the exterior (outer peripheral) surface of the thermally-insulated pipe SPa at respective ones of three second detection positions having mutually different distances from the exterior surface of the thermally-insulated pipe SPa, along the radial direction. Each of the second magnetism detection units 31b-1 to 31b-3 is the same as that of the first magnetism detection unit 31 a, and thus its description will be omitted. The second group detection unit 3b-1 is disposed with respect to the first group detection unit 3a along a circumferential direction of the thermally-insulated pipe SPa about its axis AX orthogonal to the radial direction, with an angular distance of about 30 degrees therebetween, and the eleven second group detection units 3b-1 to 3b-11 are sequentially arranged along the circumferential direction of the thermally-insulated pipe SPa about the axis AX, at angular intervals of about 30 degrees. That is, the first group detection unit 3a and the eleven second group detection units 3b-1 to 3b-11 are arranged along the circumferential direction of the thermally-insulated pipe SPa about the axis AX, at angular intervals of about 30 degrees (i.e., at even intervals). The magnetic flaw detection device M according to the first modified embodiment includes the second group detection unit 3b disposed with respect to the first group detection unit 3a along the circumferential direction, so that it is possible to derive a defect position in the circumferential direction. Particularly, the magnetic flaw detection device M depicted as one example in FIG. 4 can derive a defect position over the entire circumference of the thermally-insulated pipe SPa.

Alternatively, as depicted in FIG. 5, the above magnetic flaw detection device M may additionally include a third group detection unit 3c including a plurality of third magnetism detection units 31c each capable of detecting magnetism, wherein the plurality of third magnetism detection units 31c are arranged over the exterior surface of the inspection target object SP at respective ones of a plurality of third detection positions having mutually different distances from the exterior surface, along the first direction. The third group detection unit 3c is disposed with respect to the first group detection unit 3a along the second direction orthogonal to the first direction, with a given distance therebetween. In this case, the defect position processing section 42 is operable, based on respective detection results of the plurality of first magnetism detection units 31a in the first group detection unit 3a and the plurality of third magnetism detection units 31c in the third group detection unit 3c, to derive a position of the given defect in the inspection target object SP along the first direction and the second direction. In one example depicted in FIG. 5, in order to detect a given flaw or defect over a given range in an axial direction of the thermally-insulated pipe SPa, the third group detection unit 3c is constructed such that it includes four third group detection units 3c-1 to 3c-4, although the number of the third group detection units 3b may be one. Each of the four third group detection units 3c-1 to 3c-4 includes three third magnetism detection units 31c-1 to 31c-3 arranged over the exterior (outer peripheral) surface of the thermally-insulated pipe SPa at respective ones of three third detection positions having mutually different distances from the exterior surface of the thermally-insulated pipe SPa, along the radial direction. Each of the third magnetism detection units 31c-1 to 31c-3 is the same as that of the first magnetism detection unit 31a, and thus its description will be omitted. The third group detection unit 3c-1 is disposed with respect to the first group detection unit 3a along a direction of the axis AX of the thermally-insulated pipe SPa orthogonal to the radial direction, with a given distance therebetween, and the four third group detection units 3c-1 to 3c-4 are sequentially arranged along the direction of the axis AX of the thermally-insulated pipe SPa, at given intervals. That is, the first group detection unit 3a and the four third group detection units 3c-1 to 3c-4 are arranged along the direction of the axis AX of the thermally-insulated pipe SPa, at given intervals (i.e., at even intervals). The magnetic flaw detection device M according to the second modified embodiment includes the third group detection unit 3c disposed with respect to the first group detection unit 3a along the second direction (in the example depicted in FIG. 5, the axial direction), so that it is possible to derive a defect position in the second direction. Particularly, the magnetic flaw detection device CM depicted as one example in FIG. 5 can derive a defect position over a given range along the axial direction of the thermally-insulated pipe SPa.

The magnetic flaw detection device CM may be constructed such that it includes a combination of the second detection group 3B and the third group detection unit 3C, instead of the first group detection unit 3a. In this case, the magnetic flaw detection device CM can derive a defect position along the radial direction and the axial direction.

In the above embodiment, as a magnet field application unit 1 for the magnetic flaw detection device M, the first type of magnet field application unit 1a including the pair of first and second exciting coils 11a-1, 11a-2 has been used. Alternatively, a second type of magnet field application unit 1b or a third type of magnet field application unit 1c may be used.

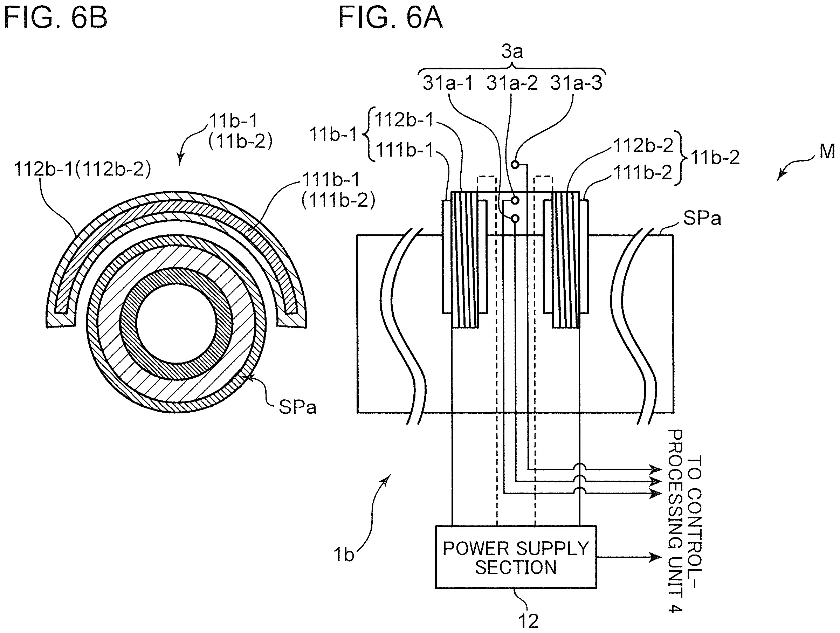

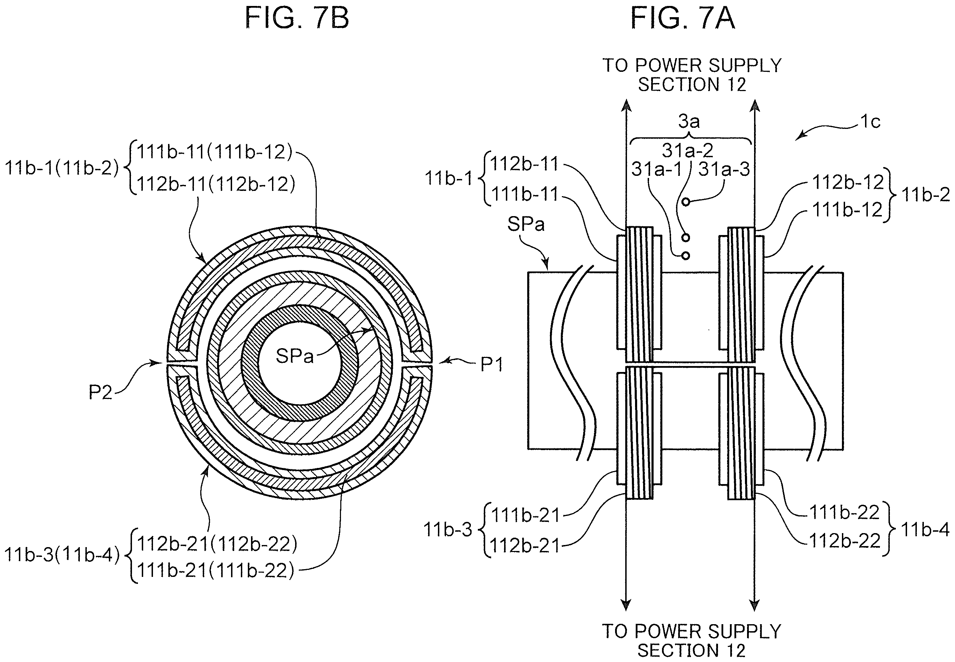

FIG. 6 is a diagram depicting a configuration of a third modification of the magnetic flaw detection device according to the above embodiment, wherein FIG. 6A depicts an overall configuration, and FIG. 6B is a sectional view of an exciting coil and a vicinity thereof. FIG. 7 is a diagram depicting a configuration of a fourth modification of the magnetic flaw detection device according to the above embodiment, wherein FIG. 7A is a front view depicting an exciting coil and a vicinity thereof, and FIG. 7B is a sectional view of the exciting coil and the vicinity thereof.

The second type of the magnet field application unit 1b is a device for applying a magnetic field to the inspection target object SP, as with the first type of magnet field application unit 1a, and includes an exciting coil 11b and a power supply section 12, as depicted in FIG. 6. The power supply section 12 in the second type of magnet field application unit 1b is identical to the power supply section 12 in the first type of magnet field application unit 1a, and thus its description will be omitted.

The exciting coil 11b is a device for, in response to receiving a supply of electric power from the power supply section 12, forming an electric field and applying the formed electric field to the inspection target object SP, as with the exciting coil 11 a in the first type of magnet field application unit 1a. In the second type of magnet field application unit 1b, the exciting coil 11b includes a pair of first and second exciting coils 11b-1, 11b-2 depicted in FIG. 6.

Each of the first and second exciting coils 11b-1, 11b-2 includes a magnetic shielding portion (111b-1, 111b-2) and an electroconductive member (112b-1, 112b-2). The first and second exciting coils 11b-1, 11b-2 are identical to each other in terms of shape, so that the following description will be made using collective terms "magnetic shielding portion 111b", "electroconductive member 112b" and "exciting coil 11b".

The magnetic shielding portion 111b is a member for shielding magnetism, and is formed in a curved plate-like shape. Preferably, the magnetic shielding portion 111b is curved in conformity to a shape of the thermally-insulated pipe SPa. More specifically, in one example, the magnetic shielding portion 111b is a part of a circular tube (hollow circular cylinder) cut along an axial direction thereof, wherein a cross-section thereof orthogonal to the axial direction has an arc shape (shape of a part of a circle). The magnetic shielding portion 111b is formed such that the arc-shaped cross-section thereof has a shape analogous to a part of a cross-section of the thermally-insulated pipe SPa so as to conform along the outer peripheral surface of the thermally-insulated pipe SPa. Preferably, in order to allow the magnetic shielding portion 111b to be disposed over (just on (in contact with) or above (in spaced-apart relation to)) the outer peripheral surface of the thermally-insulated pipe SPa, a central angle of the magnetic shielding portion 111b is set to 180 degrees or less. However, the central angle of the magnetic shielding portion 111b may be set to be slightly greater than 180 degrees, because it can be disposed in an elastically deformed state. In one example depicted in FIG. 6, it is set to 180 degrees so as to cover the outer peripheral surface of the thermally-insulated pipe SPa, reasonably and maximally. The central axis of the magnetic shielding portion 111b may be set to any one of 120 degrees, 90 degrees and 60 degrees. In the case where such a magnetic shielding portion 111b having the above central angle such as 180 degrees is used to circumferentially entirely surround the outer peripheral surface of the thermally-insulated pipe SPa, it can be achieved using a plurality of exciting coils 11b having the same shape. Thus, it is only necessary to mass-produce the exciting coils 11b having the same shape, so that it is possible to achieve reduction in cost of the exciting coil 11b based on mass production effect.

As one example, the magnetic shielding portion 111b is formed of a magnetic steel sheet, preferable, a plurality of laminated magnetic steel sheets. As another example, the magnetic shielding portion 111b is formed by subjecting a soft magnetic powder having an insulating film to compression forming.

The electroconductive member 112b is a long wire having a sectional shape such as a round shape or a polygonal shape and exhibiting electrical conductivity, and is wound around an outer peripheral surface of the magnetic shielding portion 111b through an electrical insulating material such as a resin or an oiled paper to form a coil. The electroconductive member 112b is an electroconductive wire formed of a material having a relatively high electrical conductivity, such as copper or aluminum, and insulatingly covered by a resin.

The first exciting coil 11b-1 is formed by winding the long first electroconductive member 112b-1 around the curved plate-like first magnetic shielding portion 111b-1, so that it has a superposed region where the first electroconductive member 112b-1 is partially superposed in the radial direction through the first magnetic shielding portion 111b-1. Similarly, the second exciting coil 11b-2 is formed by winding the long second electroconductive member 112b-2 around the curved plate-like second magnetic shielding portion 111b-2, so that it has a superposed region where the second electroconductive member 112b-2 is partially superposed in the radial direction through the second magnetic shielding portion 111b-2.

In the first exciting coil 11b-1, one end of the first electroconductive member 112b-1 is connected to the power supply section 12, and the other end of the first electroconductive member 112b-1 is connected to one end of the second electroconductive member 112b-2 in the second exciting coil 11b-2. Further, the other end of the second electroconductive member 112b-2 is connected to the power supply section 12. In this way, the first and second exciting coils 11b-1, 11b-2 are serially connected together. In order to feed oppositely-directed currents (current with reversed phases), respectively, to the first and second exciting coils 11b-1, 11b-2, or feed current to only one of the first and second exciting coils 11b-1, 11b-2, each of one end and the other end of the first electroconductive member 112b-1 in the first exciting coil 11b-1 may be connected to the power supply section 12, and each of one end and the other end of the second electroconductive member 112b-2 in the second exciting coil 11b-2 may be connected to the power supply section 12, as indicated by the broken lines in FIG. 6.

The magnetic flaw detection device M having the second type of magnet field application unit 1b includes the pair of first and second exciting coils 11b-1, 11b-2 each formed by winging the long electroconductive member 112b-1, 112b-2 around the curved plate-like magnetic shielding portion 111b-1, 111b-2 through an electric insulating material. Thus, each of the pair of first and second exciting coils 11b-1, 11b-2 has an arc shape in cross-section. Therefore, for inspection, the pair of first and second exciting coils 11b-1, 11b-2 can be disposed over an exterior surface of an inspection target object SP such as a pipe, in such a manner that concavely-curved surfaces of the exciting coils 11b-1, 11b-2 conform along the exterior surface. Generally, a pipe is relatively long. Thus, when an inspection target area is located in a longitudinally central region of the pipe, the first type of magnet field application unit 1a is required to move the pair of first and second exciting coils 11a-1, 11a-2 from one end of the pipe to the inspection target area. This is burdensome and time-consuming. Moreover, in inspection for an actually installed pipe, there is a possibility that the pair of first and second exciting coils 11a-1, 11a-2 cannot be moved to the inspection target area due to a fixing or supporting member of the pipe. For this reason, in the first type of magnet field application unit 1a, each of the electroconductive members 112a-1, 112a-2 may be provided with an electrical connector, so as to enable each of the exciting coils 11a-1, 11a-2 to be placed in an open-circuit state. In this case, however, the electrical connector is likely to cause some problem. In contrast, the second type of magnet field application unit 1b can be disposed over a pipe such as the thermally-insulated pipe SPa, in the above manner, to thereby avoid the above undesirable situation.

Although the second type of magnet field application unit 1b is constructed such that it includes one pair of exciting coils 1, the magnet field application unit is not limited thereto, but may be constructed such that it includes a plurality of pairs of exciting coils 11b. In this case, the magnetic flaw detection device M includes a plurality of pairs of exciting coils 11b. Thus, it becomes possible to arrange the plurality of pairs of exciting coils 11b along a length direction of the inspection target object SP, and thus detect a flaw or defect in the inspection target object SP in a wider range along the length direction. In addition, in this magnetic flaw detection device M, it becomes possible to arrange the plurality of pairs of exciting coils 11b along a circumferential direction of the inspection target object SP, and thus detect a flaw or defect in the inspection target object SP in a wider range along the circumferential direction.

In the case where the magnetic flaw detection device M is constructed such that it includes a plurality of pairs of exciting coils 11b, the plurality of pairs of exciting coils 11b are preferably arranged to form a circular tubular shape. In this case, the magnetic flaw detection device M includes a plurality of pairs of exciting coils 11b which are sequentially arranged in circumferentially mutually adjacent relation to form a circular tubular shape. Thus, in this magnetic flaw detection device M, it becomes possible to substantially construct a Helmholtz coil by using the plurality of pairs of exciting coils 11b, and thus form a homogeneous magnetic field between each of the pairs of exciting coils 11b and over the entire circumferential direction, in the same manner as that in a Helmholtz coil.

The third type of magnet field application unit 11 includes two pairs of exciting coils 11b arranged to form a circular tubular shape, and a non-depicted power supply section 12. The non-depicted power supply section 12 in the third type of magnet field application unit 1c is identical to the power supply section 12 in the first type of magnet field application unit 1a, and thus its description will be omitted. More specifically, as depicted in FIG. 7, the third type of magnet field application unit 11c is constructed such that it includes two pairs of exciting coils 11b which consist of a pair of first and second exciting coils 11b-1, 11b-2, and a pair of third and fourth exciting coils 11b-3, 11b-4. In this example depicted in FIG. 7, the pair of first and second exciting coils 11b-1, 11b-2 are serially connected together and each of them is connected to the non-depicted power supply section 12. Similarly, the pair of third and fourth exciting coils 11b-3, 11b-4 are serially connected together and each of them is connected to the non-depicted power supply section 12. Then, adjacent areas of the electroconductive members 112b of the two exciting coils 11b located in circumferentially mutually adjacent relation are preferably arranged parallel to each other along the radial direction. In the example depicted in FIG. 7, adjacent areas P1, P2 of the electroconductive members 112b-1, 112b-3 of the first and third exciting coils 11b-1, 11b-3 located in circumferentially mutually adjacent relation are arranged parallel to each other along the radial direction. Similarly, non-depicted adjacent areas P3, P4 of the electroconductive members 112b-2, 112b-4 of the second and fourth exciting coils 11b-2, 11b-4 located in circumferentially mutually adjacent relation are arranged parallel to each other along the radial direction. More specifically, an edge faces of first and third magnetic shielding portions 111b-1, 111b-3 each having a semi-circular tube shape with a central angle of 180 degrees, and in parallel to the axis direction are formed in a planar shape along the radial direction. When the first and third electroconductive members 112b-1, 112b-3 are wound, respectively, around the first and third magnetic shielding portions 111b-1, 111b-3, the first and third electroconductive members 112b-1, 112b-3 become approximately parallel to each other in the adjacent areas P1, P2. Similarly, an edge faces of second and fourth magnetic shielding portions 111-2, 111b-4 each having a semi-circular tube shape with a central angle of 180 degrees, and in parallel to the axis direction are formed in a planar shape along the radial direction. When the second and fourth electroconductive members 112b-2, 112b-4 are wound, respectively, around the second and fourth magnetic shielding portions 111b-2, 111b-4, the second and fourth electroconductive members 112b-2, 112b-4 become approximately parallel to each other in the adjacent areas P3 , P4. In this magnetic flaw detection device M, oppositely-directed currents are supplied, respectively, to the electroconductive members 112b-1, 112b-3; 112b-2, 112b-4 of the two exciting coils 11b-1, 11b-3; 11b-2, 11b-4 located in circumferentially mutually adjacent relation. In this case, the adjacent areas P1, P2; P3, P4 of the electroconductive members 112b-1, 112b-3;
112b-2, 112b-4 are arranged parallel to each other along the radial direction, so that magnetic fields induced in the adjacent areas P1, P2; P3, P4 by the currents are oriented in opposite directions and cancelled each other out. Therefore, in this magnetic flaw detection device M, it becomes possible to form a homogenous magnetic field using the two pairs of exciting coils 11b-1, 11b-2; 11b-3, 11b-4.

The specification discloses the aforementioned features. The following is a summary of the primary features of the embodiments.

According to an aspect of the embodiments, there is provided a magnetic flaw detection device including: a magnetic field application unit which applies a magnetic field to an inspection target object; a first group detection unit including a plurality of first magnetism detection units each capable of detecting magnetism, wherein the plurality of first magnetism detection units are arranged over an exterior surface of the inspection target object at respective ones of a plurality of first detection positions having mutually different distances from the exterior surface, along a first direction causing a distance with respect to the inspection target object to gradually increase or decrease; and a defect position processing section which derives a position of a given defect in the inspection target object along the first direction, based on respective detection results of the plurality of first magnetism detection units in the first group detection unit.

In this magnetic flaw detection device, it is possible to detect magnetism using the plurality of first magnetism detection units in the first group detection unit at respective ones of the plurality of first detection positions having mutually different distances from the exterior surface of the inspection target object. Thus, it is possible to detect, based on obtained detection results, a position of the given defect in the inspection target object along the first direction causing a distance with respect to the inspection target object to gradually increase or decrease, using the defect position processing section.

According to another aspect of the embodiments, in one embodiment of the above magnetic flaw detection device, the defect position processing section is operable, using the following conditions (1) and (2), and based on the detection results of the plurality of first-group magnetism detection units in the first group detection unit, to derive respective magnetic field intensities at a plurality of observation target positions located on an inner side with respect to the exterior surface of the inspection target object at mutually different distances from the exterior surface along the first direction, and then, based on the derived magnetic field intensities at the plurality of observation target positions, to derive a position of the given defect in the inspection target object:
the condition (1): the detection result of an arbitrary one of the plurality of first magnetism detection units is a sum of respective magnetic fields intensities of magnetic fields which are originated at respective ones of the plurality of observation target positions and propagated from the plurality of observation target positions to the first detection position of the arbitrary one of the plurality of first magnetism detection units, and
the condition (2): the magnetic field intensity has a specific relationship with respect to a distance between the observation target position and the first detection position.

In this magnetic flaw detection device, a plurality of relational formulas regarding magnetic field intensities at the plurality of observation target positions can be created by applying the conditions 1 and 2 to the detection results of the plurality of first magnetism detection units, and respective magnetic field intensities at the plurality of observation target positions can be derived by analyzing the relational formulas. Thus, in this magnetic flaw detection device, by comparing respective derived magnetic field intensities at the plurality of observation target positions with a magnetic field intensity in a defect-free normal state, it is possible to determine whether there is a defect, and consequently derive a defect position.

According to another aspect of the embodiments, in one embodiment of the above magnetic flaw detection device, when the inspection target object is a multi-laminated pipe prepared by laminating, in a radial direction thereof, a plurality of tubular members having mutually different diameters, the defect position processing section is operable to: select two of the plurality of first magnetism detection units in the first group detection unit; carry out an operation of subtracting, from a detection result of one of the selected two first magnetism detection units which is farther in distance from the exterior surface along the first direction, a division result derived from dividing a detection result of the remaining one of the selected two first magnetism detection units which is nearer in distance from the exterior surface along the first direction, by a square of the distance of the farther first magnetism detection unit from the exterior surface; and compare the derived subtraction result with a given determination threshold to thereby derive whether or not there is a defect in one or more of the plurality of tubular members, except one of the plurality of tubular members located on an outermost side thereof, as a position of the given defect in the inspection target object.

In this magnetic flaw detection device, by utilizing the phenomenon that a magnetic field intensity is attenuated in reverse proportion to a square of a distance, it is possible to easily derive the presence or absence of a defect of a tubular member on an inner side with respect to an outermost tubular member, as a position of the given defect in the inspection target object. In particular, in a double-laminated pipe, it is only necessary to discriminate between a defect in an outer pipe located on a relatively outer side of the double-laminated pipe, and a defect in an inner pipe located on a relatively inner side of the double-laminated pipe. Therefore, the above magnetic flaw detection device is suitable in the case where the inspection target object is a double-laminated pipe.

According to another aspect of the embodiments, the magnetic flaw detection device further includes a second group detection unit including a plurality of second magnetism detection units each capable of detecting magnetism, the plurality of second magnetism detection units being arranged over the exterior surface of the inspection target object at respective ones of a plurality of second detection positions having mutually different distances from the surface, along the first direction, wherein: the second group detection unit is disposed with respect to the first group detection unit along a circumferential direction about axis extending in a second direction orthogonal to the first direction, with a given angular distance therebetween; and the defect position processing section is operable, based on respective detection results of the plurality of first magnetism detection units in the first group detection unit and the plurality of second magnetism detection units in the second group detection unit, to derive a position of the given defect in the inspection target object along the first direction and along the circumferential direction.

This magnetic flaw detection device comprises the second group detection unit disposed with respect to the first group detection unit along the circumferential direction, so that it is possible to derive a defect position in the circumferential direction.

According to another aspect of the embodiments, the magnetic flaw detection device further includes a third group detection unit including a plurality of third magnetism detection units each capable of detecting magnetism, the plurality of third magnetism detection units being arranged over the surface of the inspection target object at respective ones of a plurality of third detection positions having mutually different distances from the exterior surface, along the first direction, wherein: the third group detection unit is disposed along a second direction orthogonal to the first direction, with a given distance with respect to the first group detection unit; and the defect position processing section is operable, based on respective detection results of the plurality of first magnetism detection units in the first group detection unit and the plurality of third magnetism detection units in the third group detection unit, to derive a position of the given defect in the inspection target object along the first direction and along the second direction.

This magnetic flaw detection device includes the third group detection unit disposed with respect to the first group detection unit along the second direction, so that it is possible to derive a defect position in the second direction.

According to another aspect of the embodiments, there is provided a magnetic flaw detection method including: a magnetic field application step of applying a magnetic field to an inspection target object; a magnetism detection step of detecting magnetism at respective ones of a plurality of detection positions located over an exterior surface of the inspection target object in spaced-apart relation to each other along a first direction causing a distance with respect to the inspection target object to gradually increase or decrease; and a defect position computing step of deriving a position of a given defect in the inspection target object along the first direction, based on respective detection results obtained in the magnetism detection step.

In this magnetic flaw detection method, it is possible to detect magnetism at respective ones of the plurality of first detection positions having mutually different distances from the exterior surface of the inspection target object. Thus, it is possible to detect, based on obtained detection results, a position of the given defect in the inspection target object along the first direction causing a distance with respect to the inspection target object to gradually increase or decrease, through the defect position processing step.

This application is based on Japanese Patent Application Serial No. 2014-236335 filed in Japan Patent Office on November 21, 2014, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

### Industrial Applicability

The present invention can provide a magnetic flaw detection device and a magnetic flaw detection method.

## Claims

1. A magnetic flaw detection device comprising:
a magnetic field application unit which applies a magnetic field to an inspection target object;
a first group detection unit comprising a plurality of first magnetism detection units each capable of detecting magnetism, the plurality of first magnetism detection units being arranged over an exterior surface of the inspection target object at respective ones of a plurality of first detection positions having mutually different distances from the exterior surface, along a first direction causing a distance with respect to the inspection target object to gradually increase or decrease; and
a defect position processing section which derives a position of a given defect in the inspection target object along the first direction, based on respective detection results of the plurality of first magnetism detection units in the first group detection unit.

2. The magnetic flaw detection device as recited in claim 1, wherein the defect position processing section is operable, using the following conditions (1) and (2), and based on the detection results of the plurality of first-group magnetism detection units in the first group detection unit, to derive respective magnetic field intensities at a plurality of observation target positions located on an inner side with respect to the exterior surface of the inspection target object at mutually different distances from the exterior surface along the first direction, and then, based on the derived magnetic field intensities at the plurality of observation target positions, to derive a position of the given defect in the inspection target object:
the condition (1): the detection result of an arbitrary one of the plurality of first-group magnetism detection units is a sum of respective magnetic fields intensities of magnetic fields which are originated at respective ones of the plurality of observation target positions and propagated from the plurality of observation target positions to the first-group detection position of the arbitrary one of the plurality of first-group magnetism detection units, and
the condition (2): the magnetic field intensity has a specific relationship with respect to a distance between the observation target position and the first detection position.

3. The magnetic flaw detection device as recited in claim 1, wherein the inspection target object is a multi-laminated pipe prepared by laminating, in a radial direction thereof, a plurality of tubular members having mutually different diameters, and wherein
the defect position processing section is operable to: select two of the plurality of first magnetism detection units in the first group detection unit; carry out an operation of subtracting, from a detection result of one of the selected two first magnetism detection units which is farther in distance from the exterior surface along the first direction, a division result derived from dividing a detection result of the remaining one of the selected two first magnetism detection units which is nearer in distance from the exterior surface along the first direction, by a square of the distance of the farther first magnetism detection unit from the exterior surface; and compare the derived subtraction result with a given determination threshold to thereby derive whether or not there is a defect in one or more of the plurality of tubular members, except one of the plurality of tubular members located on an outermost side thereof, as a position of the given defect in the inspection target object.

4. The magnetic flaw detection device as recited in any one of claims 1 to 3, which further comprises a second group detection unit comprising a plurality of second magnetism detection units each capable of detecting magnetism, the plurality of second magnetism detection units being arranged over the exterior surface of the inspection target object at respective ones of a plurality of second detection positions having mutually different distances from the surface, along the first direction, wherein:
the second group detection unit is disposed with respect to the first group detection unit along a circumferential direction about an axis extending in a second direction orthogonal to the first direction, with a given angular distance therebetween; and
the defect position processing section is operable, based on respective detection results of the plurality of first magnetism detection units in the first group detection unit and the plurality of second magnetism detection units in the second group detection unit, to derive a position of the given defect in the inspection target object along the first direction and along the circumferential direction.

5. The magnetic flaw detection device as recited in any one of claims 1 to 4, which further comprises a third group detection unit comprising a plurality of third magnetism detection units each capable of detecting magnetism, the plurality of third magnetism detection units being arranged over the surface of the inspection target object at respective ones of a plurality of third detection positions having mutually different distances from the exterior surface, along the first direction, wherein:
the third group detection unit is disposed along a second direction orthogonal to the first direction, with a given distance with respect to the first group detection unit; and
the defect position processing section is operable, based on respective detection results of the plurality of first magnetism detection units in the first group detection unit and the plurality of third magnetism detection units in the third group detection unit, to derive a position of the given defect in the inspection target object along the first direction and along the second direction.

6. A magnetic flaw detection method comprising:
a magnetic field application step of applying a magnetic field to an inspection target object;
a magnetism detection step of detecting magnetism at respective ones of a plurality of detection positions located over an exterior surface of the inspection target object in spaced-apart relation to each other along a first direction causing a distance with respect to the inspection target object to gradually increase or decrease; and
a defect position computing step of deriving a position of a given defect in the inspection target object along the first direction, based on respective detection results obtained in the magnetism detection step.
